# EUROPÄISCHE PATENTSCHRIFT

(11) **EP 3 795 431 B1**
(45) Veröffentlichungstag und Bekanntmachung des Hinweises auf die Patenterteilung: **29.11.2023**
(21) Anmeldenummer: 20195281.9
(22) Anmeldetag: 09.09.2020
(51) Int. Cl.: B60R 25/021

(54) **VERRIEGELUNGSVORRICHTUNG FÜR EIN FUNKTIONSWESENTLICHES BAUTEIL, FUNKTIONSEINHEIT FÜR EIN FAHRZEUG SOWIE VERFAHREN ZUM ZERSTÖRUNGSFREIEN ABSTÜTZEN EINER BEWEGUNG EINES FUNKTIONSWESENTLICHEN BAUTEILS**
LOCKING DEVICE FOR A FUNCTIONAL COMPONENT, FUNCTIONAL UNIT FOR A VEHICLE AND METHOD FOR NON-DESTRUCTIVE SUPPORT OF A MOVEMENT OF A FUNCTIONAL COMPONENT
DISPOSITIF DE VERROUILLAGE POUR UN COMPOSANT FONCTIONNEL, UNITÉ FONCTIONNELLE POUR UN VÉHICULE AINSI QUE PROCÉDÉ DE SUPPORT NON DESTRUCTIF POUR UN MOUVEMENT D'UN COMPOSANT FONCTIONNEL

(30) Priorität: 19.09.2019 DE 102019125189
(43) Veröffentlichungstag der Anmeldung: 24.03.2021
(73) Patentinhaber: Huf Hülsbeck & Fürst GmbH & Co. KG, 42551 Velbert (DE)
(72) Erfinder: Denzle, Michael, 86356 Neusäß (DE); Heppner, Mario, 82008 Unterhaching (DE)
(74) Vertreter: Bals & Vogel Patentanwälte PartGmbB

(56) Entgegenhaltungen:
- EP-A2- 0 887 240
- EP-A2- 1 249 375
- US-A1- 2004 069 026

## Beschreibung

Die Erfindung betrifft eine Verriegelungsvorrichtung für ein funktionswesentliches Bauteil eines Fahrzeuges, insbesondere für ein Lenkgetriebe, eine Funktionseinheit für ein Fahrzeug sowie ein Verfahren zum zerstörungsfreien Abstützen einer Bewegung eines funktionswesentlichen Bauteils eines Fahrzeuges.

Aus dem Stand der Technik sind Verriegelungsvorrichtungen für funktionswesentliche Bauteile von Fahrzeugen grundsätzlich bekannt. Dabei handelt es sich meist um Sicherheitsvorrichtungen, durch welche das funktionswesentliche Bauteil in einer bestimmten Position verriegelbar ist, sodass das Fahrzeug nicht ohne Weiteres durch eine unbefugte Person bewegbar ist.

Derartige Vorrichtungen werden z.B. zum Sperren von Lenksäulen oder Gangschalthebeln eingesetzt. Ferner weisen solche Vorrichtungen häufig einen bewegbar gelagerten Sperrbolzen auf, der mithilfe eines Getriebes zwischen einer Verriegelungsposition zum Verriegeln des funktionswesentlichen Bauteils und einer Entriegelungsposition zum Entriegeln des funktionswesentlichen Bauteils überführt wird. In der Verriegelungsposition greift der Sperrbolzen dabei normalerweise zwischen zwei Zähne eines zahnradartigen Elementes des formschlüssigen Bauteils ein, um eine Bewegung insbesondere in Form einer Drehung des funktionswesentlichen Bauteils zu verhindern. Wird das funktionswesentliche Bauteil dennoch bewegt, wird eine Querkraft durch die Zähne auf den Sperrbolzen übertragen, sodass dieser in Richtung einer Kippbewegung belastet wird. Dabei stützt sich der Sperrbolzen an einer Führung ab, welche bei hohen Belastungen beschädigt werden kann.

Insbesondere bei Nutzfahrzeugen entfällt immer häufiger eine Einstiegshilfe, an welcher sich der Fahrer zum Einstieg in das Fahrzeug festhalten kann, sodass ein Fahrer geneigt ist das Lenkrad als eine solche Einstiegshilfe zu nutzen und somit sein Körpergewicht am Lenkrad beim Einstieg in die Fahrerkabine abzustützen.

Aus der US 2004/0069026 A1 ist eine elektrisch betriebene Vorrichtung zur Verriegelung einer Lenkwelle bekannt.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung in kostengünstiger Art und Weise eine Beschädigung einer Verriegelungsvorrichtung für ein funktionswesentliches Bauteil in Folge einer Belastung des funktionswesentlichen Bauteils zu vermeiden.

Die voranstehende Aufgabe wird gelöst durch eine Verriegelungsvorrichtung mit den Merkmalen des Anspruchs 1, eine Funktionseinheit mit den Merkmalen des Anspruchs 12, sowie ein Verfahren mit den Merkmalen des Anspruchs 14. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Verriegelungsvorrichtung beschrieben sind, selbstverständlich auch im Zusammenhang mit der erfindungsgemäßen Funktionseinheit und/oder dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist eine Verriegelungsvorrichtung für ein funktionswesentliches Bauteil eines Fahrzeuges vorgesehen. Die Verriegelungsvorrichtung weist ein Sperrelement zum Verriegeln des funktionswesentlichen Bauteils und ein Montagegehäuse auf. In dem Montagegehäuse ist das Sperrelement zum Verriegeln des funktionswesentlichen Bauteils bewegbar angeordnet. Das Montagegehäuse ist ferner zumindest teilweise mit einem Freiraum zu einem Bauteilgehäuse für das funktionswesentliche Bauteil montierbar. Weiterhin ist vorgesehen, dass das Montagegehäuse einen starren Gehäuseabschnitt und ein Ausweichelement aufweist. Das Ausweichelement ist bewegbar an dem starren Gehäuseabschnitt angeordnet, um einer Kippbewegung des Sperrelementes, insbesondere dem Sperrelement, in Richtung des Freiraumes von einer Ruhelage in eine Ausweichlage auszuweichen.

Bei dem funktionswesentlichen Bauteil kann es sich z.B. um eine Lenksäule oder eine Schaltvorrichtung, insbesondere in Form eines Gangschalthebels, handeln. Somit kann durch die Verriegelungsvorrichtung insbesondere ein Lenkrad oder Getriebesperre zur Verfügung gestellt werden. Bei dem Sperrelement kann es sich vorzugsweise um einen Sperrbolzen handeln. Insbesondere kann das Sperrelement zwischen einer Verriegelungsposition und einer Entriegelungsposition verstellbar sein, um das funktionswesentliche Bauteil in der Verriegelungsposition, insbesondere in seiner Funktion, zu sperren und in der Entriegelungsposition freizugeben. Insbesondere kann das Sperrelement zwischen der Verriegelungsposition und der Entriegelungsposition linear in einer Bewegungsrichtung bewegbar sein. Das Bauteilgehäuse kann insbesondere das funktionswesentliche Bauteil zumindest teilweise oder vollständig umgeben. Somit kann es sich insbesondere bei dem Bauteilgehäuse um ein Gehäuse des funktionswesentlichen Bauteils handeln.

Das Montagegehäuse, in dem das Sperrelement bewegbar ist, kann insbesondere mehrere Gehäuseabschnitte aufweisen. Darüber hinaus können weitere Komponenten der Verriegelungsvorrichtung im Montagegehäuse angeordnet sein. Insbesondere kann das Sperrelement durch das Montagegehäuse vor Umwelteinflüssen und/oder vor einer unbefugten Einflussnahme geschützt sein. Es ist denkbar, dass das Montagegehäuse zumindest teilweise in dem Bauteilgehäuse des funktionswesentlichen Bauteils montierbar ist, sodass der Freiraum zwischen dem Bauteilgehäuse und dem Montagegehäuse ausgebildet wird.

Unter dem Freiraum kann insbesondere ein Raum verstanden werden, der frei von Bauteilen ist. Vorzugsweise handelt es sich bei dem Freiraum um einen Spalt zwischen dem Bauteilgehäuse und dem Montagegehäuse. Bei einer Belastung des Montagegehäuses in Richtung des Freiraumes kann im Freiraum daher insbesondere zunächst keine Aufnahme einer Belastung erfolgen und/oder das Montagegehäuse nicht abgestützt werden. Beispielsweise kann der Freiraum eine Breite zwischen dem Montagegehäuse und dem Bauteilgehäuse von unter 1 mm und/oder größer oder gleich 0,1 mm, besonders bevorzugt zwischen 0,1 mm und 0,7 mm, aufweisen. Durch das Bauteilgehäuse kann insbesondere das funktionswesentliche Bauteil und/oder ein Teil der Verriegelungsvorrichtung zumindest teilweise vor Umwelteinflüssen schützbar sein. Der starre Gehäuseabschnitt ist dabei insbesondere starr zum Bauteilgehäuse anordbar und/oder befestigbar. Vorzugsweise ist das Montagegehäuse zumindest teilweise in eine Montageschnittstelle, d.h. vorzugsweise eine Öffnung im Bauteilgehäuse, in das Bauteilgehäuse einsteckbar.

Durch das Ausweichelement kann insbesondere eine Kraftübertragung vom Sperrelement auf den starren Gehäuseabschnitt vermieden werden oder reduziert werden. Dadurch kann es ermöglicht sein, dass das Sperrelement sich bei der Kippbewegung des Sperrelementes nicht am starren Gehäuseabschnitt abstützt, sodass dieses auch nicht beschädigt wird. Unter dem Ausweichen des Ausweichelementes in die Ausweichlage in Richtung des Freiraumes kann insbesondere verstanden werden, dass das Ausweichelement dem Sperrelement keinen oder nur einen geringeren Widerstand entgegenbringt. Insbesondere ist das Ausweichelement somit durch das Sperrelement von der Ruhelage in die Ausweichlage bewegbar. Beispielsweise kann das Ausweichelement von dem Sperrelement von der Ruhelage in die Ausweichlage drückbar sein. Insbesondere kann durch das Ausweichelement somit ein flexibler Gehäuseabschnitt geschaffen sein. Durch den flexiblen Gehäuseabschnitt kann somit eine Lastaufnahme innerhalb der Verriegelungsvorrichtung und/oder am funktionswesentlichen Bauteil verbessert sein.

Somit kann die Bewegung und/oder Belastung des Sperrelementes aufgefangen werden, ohne das Montagegehäuse zu beschädigen oder zu zerstören. Insbesondere kann dadurch vermieden werden, dass bspw. Teile des Montagegehäuses brechen und das funktionswesentliche Bauteil beschädigen oder blockieren. Ferner kann dadurch auch bei hohen Belastungen eine Bewegung des funktionswesentlichen Bauteils vermieden werden, sodass die Sicherheit des Fahrzeuges insgesamt verbessert werden kann.

Ferner kann bei einer erfindungsgemäßen Verriegelungsvorrichtung vorteilhafterweise vorgesehen sein, dass das Ausweichelement durch ein vom starren Gehäuseabschnitt separates Einsatzteil gebildet ist. Unter dem separaten Einsatzteil kann insbesondere ein vom starren Gehäuseabschnitt gesondertes Bauteil verstanden werden. Das separate Einsatzteil kann dabei am starren Gehäuseabschnitt flexibel befestigt sein oder lose am starren Gehäuseabschnitt fixiert sein. Vorzugsweise kann das Ausweichelement dabei derart ausgestaltet sein, dass es lediglich in einer Orientierung am starren Gehäuseabschnitt anordbar ist, um eine Montage des Ausweichelementes am starren Gehäuseabschnitt zu vereinfachen. Durch die Ausbildung des Ausweichelementes als separates Einsatzelement kann eine einfache Möglichkeit geschaffen sein, eine Ausweichbewegung bei einer Kippbewegung des Sperrelementes zu ermöglichen, ohne eine Belastung des Sperrelementes auf den starren Gehäuseabschnitt vollständig zu übertragen.

Weiterhin ist es bei einer erfindungsgemäßen Verriegelungsvorrichtung denkbar, dass das Montagegehäuse eine Sperrelementführung zum Führen des Sperrelementes, insbesondere entlang einer Bewegungsrichtung des Sperrelementes, aufweist, welche in das Bauteilgehäuse einsteckbar ist, so dass der Freiraum zwischen der Sperrelementführung und dem Bauteilgehäuse ausgebildet wird, insbesondere wobei das Ausweichelement in der Ruhelage einen Gehäuseteil der Sperrelementführung bildet, durch welchen das Sperrelement zumindest bereichsweise führbar ist. Zum Führen des Sperrelementes kann die Sperrelementführung insbesondere einen Führungskanal aufweisen, indem das Sperrelement sich zwischen der Verriegelungsposition und der Entriegelungsposition bewegen kann. Der Freiraum kann insbesondere dadurch entstehen, dass die Sperrelementführung in das Bauteilgehäuse des beweglichen Bauteils eingesteckt wird und insbesondere anschließend befestigt wird. Somit kann der Freiraum ein Spiel zwischen der Sperrelementführung und dem Bauteilgehäuse umfassen. Durch den Freiraum kann daher die Montage der Sperrelementführung im Bauteilgehäuse vereinfacht und/oder ermöglicht sein. Vorzugsweise kann das Ausweichelement in der Ruhelage einen unteren Gehäuseteil der Sperrelementführung bilden. Wenn das Sperrelement aufgrund einer Bewegung des funktionswesentlichen Bauteils verkippt und insbesondere gegen eine Kante der Sperrelementführung gedrückt wird, kann durch eine Anordnung des Ausweichelementes in diesem Bereich folglich eine Bruchgefahr reduziert oder vermieden werden. Vorzugsweise ersetzt das Ausweichelement somit insbesondere einen hochbelastenden Gehäuseteil der Sperrelementführung.

Weiterhin ist es bei einer erfindungsgemäßen Verriegelungsvorrichtung denkbar, dass das Ausweichelement einen Scharnierabschnitt aufweist, mit welchem das Ausweichelement, insbesondere schwenkbeweglich, am starren Gehäuseabschnitt gelagert ist. Der Scharnierabschnitt kann vorzugsweise eine Rundung aufweisen, durch welche eine Schwenkbewegung des Ausweichelementes am starren Gehäuseabschnitt begünstigt ist. Insbesondere kann das Ausweichelement durch den Scharnierabschnitt am starren Gehäuseabschnitt abrollen, um eine Bewegung um eine starre oder bewegbare Drehachse zu ermöglichen. Insbesondere bei einer losen Lagerung des Ausweichelementes am starren Gehäuseabschnitt kann durch den Scharnierabschnitt ferner eine Abstützung des Ausweichelementes am starren Gehäuseabschnitt ermöglicht sein. Unter einer Schwenkbewegung des Ausweichelementes kann insbesondere verstanden werden, dass das Ausweichelement eine zumindest teilweise rotatorische Bewegung um eine Drehachse ausführt. Dadurch kann das Ausweichelement in vorteilhafter Art und Weise der Kippbewegung des Sperrelementes folgen bzw. vorauseilen, um die Belastung des starren Gehäuseabschnittes durch das Sperrelement zu vermeiden.

Es ist ferner bei einer erfindungsgemäßen Verriegelungsvorrichtung denkbar, dass in der Ruhelage eine Öffnung des Montagegehäuses durch das Ausweichelement zumindest bereichsweise verschlossen ist und in der Ausweichlage zumindest bereichsweise geöffnet ist. Die Öffnung des Montagegehäuses erstreckt sich dabei vorzugsweise von einer Außenseite bis zu einem Führungskanal des Sperrelementes. Insbesondere klappt das Ausweichelement an der Öffnung bei der Kippbewegung des Sperrelementes auf, um die Öffnung freizugeben, sodass sich das Sperrelement zumindest teilweise in den Bereich der Öffnung bewegen kann. Dadurch kann dem Sperrelement ein vorteilhafter Raum zur Bewegung gegeben werden, ohne den starren Gehäuseabschnitt des Montagegehäuses in schädlicher Art und Weise zu belasten.

Vorzugsweise kann bei einer erfindungsgemäßen Verriegelungsvorrichtung vorgesehen sein, dass das Sperrelement, insbesondere in der Ausweichlage des Ausweichelements, durch das Ausweichelement über den Freiraum am Bauteilgehäuse abstützbar ist. Insbesondere kann das Ausweichelement bei der Kippbewegung des Sperrelementes sich zumindest bereichsweise in den Freiraum bewegen, bis das Ausweichelement das Bauteilgehäuse erreicht hat. Vorzugsweise kann das Ausweichelement somit den Freiraum überbrücken, um das Sperrelement am Bauteilgehäuse abzustützen. Dadurch ist es nicht notwendig, dass das Sperrelement durch ein weiteres Bauteil abgestützt wird, um eine weitere Bewegung des funktionswesentlichen Bauteils zu verhindern. Vorzugsweise kann durch das Ausweichelement ein maximaler Bewegungsweg des Sperrelementes bei der Kippbewegung des Sperrelementes vorgebbar sein. Insbesondere wird das Ausweichelement beim Abstützen über den Freiraum durch eine Druckbelastung belastet, sodass eine Rissbildung reduziert oder ausgeschlossen ist.

Ferner kann bei einer erfindungsgemäßen Verriegelungsvorrichtung vorteilhafterweise vorgesehen sein, dass am Montagegehäuse ein, vorzugsweise elastisches, Rückstellmittel angeordnet ist, durch welches das Ausweichelement von der Ausweichlage in die Ruhelage bewegbar ist, insbesondere wobei das Rückstellmittel in der Ausweichlage des Ausweichelementes eine Rückstellkraft auf das Ausweichelement bewirkt. Durch das Rückstellmittel kann das Ausweichelement somit nach der Belastung automatisch in die Ruhelage zurückkehren. Bei der Rückstellkraft kann es sich insbesondere um eine Federkraft des Rückstellmittels handeln. Bei dem Rückstellmittel kann es sich vorzugsweise um ein vollständig elastisches Bauteil oder um ein zumindest teilweise elastisches Bauteil handeln. Insbesondere kann das Rückstellmittel zumindest einen elastischen Abschnitt aufweisen, um die Rückstellkraft auf das Ausweichelement aufzubringen. Weiterhin kann das Rückstellmittel bei der Bewegung des Ausweichelementes von der Ruhelage in die Ausweichlage elastisch ausgelenkbar sein. Vorzugsweise umfasst das Rückstellmittel einen Federstahl oder besteht aus einem Federstahl. Ferner kann vorgesehen sein, dass in der Ausweichlage durch das Rückstellmittel eine Rückstellkraft auf das Sperrelement wirkt, sodass auch das Sperrelement in eine Ausgangslage in der Sperrelementführung zurück verstellt wird. Dadurch kann gewährleistet sein, dass sich das Sperrelement zurück in die Entriegelungsposition bewegen kann ohne zu verhaken.

Vorzugsweise kann bei einer erfindungsgemäßen Verriegelungsvorrichtung ein Halteelement vorgesehen sein, durch welches das Ausweichelement zumindest in der Ruhelage am starren Gehäuseabschnitt, vorzugsweise lösbar, fixiert ist, insbesondere wobei das Halteelement einstückig und/oder einteilig mit dem Rückstellmittel ausgebildet ist. Durch das Halteelement kann das Ausweichelement in der Ruhelage und der Ausweichlage, insbesondere flexibel, am starren Gehäuseabschnitt befestigt sein. Weiterhin kann das Halteelement einstückig und/oder materialeinheitlich mit dem Rückstellmittel ausgebildet sein. Beispielsweise ist es denkbar, dass das Halteelement einen elastischen Abschnitt aufweist, durch den das Zurückstellen des Ausweichelementes von der Ausweichlage in die Ruhelage ermöglicht ist. Insbesondere fixiert das Halteelement das Ausweichelement bewegbar an der Sperrelementführung. Vorzugsweise kann das Halteelement durch das Rückstellmittel gebildet sein. So ist es denkbar, dass eine elastische Klemmkraft, die durch das Halteelement aufgebracht wird und das Ausweichelement in der Ruhelage am starren Gehäuseabschnitt fixiert, zum Zurückstellen des Ausweichelementes von der Ausweichlage in die Ruhelage genutzt wird.

Weiterhin ist es bei einer erfindungsgemäßen Verriegelungsvorrichtung denkbar, dass das Halteelement von einer Montageseite auf die Sperrelementführung aufsteckbar ist, um das Ausweichelement lösbar am starren Gehäuseabschnitt zu fixieren, insbesondere wobei das Halteelement die Sperrelementführung klammerartig umgreift. Unter dem klammerartigen Umgreifen kann insbesondere verstanden werden, dass das Halteelement vorzugsweise von zumindest zwei gegenüberliegenden Seiten, vorzugsweise von drei Seiten, auf die Sperrelementführung, d.h. insbesondere auf den starren Gehäuseabschnitt und das Ausweichelement wirkt. Vorzugsweise kann vorgesehen sein, dass das Halteelement das Ausweichelement an einer dem Ausweichelement gegenüberliegenden Seite der Sperrelementführung abstützt. Insbesondere kann das Halteelement und/oder das Rückstellmittel zur Montage des Halteelementes an der Sperrelementführung elastisch spreizbar sein, sodass das Aufstecken des Halteelementes auf die Sperrelementführung vereinfacht ist und gleichzeitig eine Klemmwirkung zum Fixieren des Ausweichelementes am starren Gehäuseabschnitt zu bewirkbar ist. Dadurch kann gleichzeitig eine einfache Montage und eine ausreichende Beweglichkeit des Ausweichelementes am starren Gehäuseabschnitt durch das Halteelement ermöglicht sein.

Es ist ferner bei einer erfindungsgemäßen Verriegelungsvorrichtung denkbar, dass der starre Gehäuseabschnitt und/oder das Ausweichelement eine Aussparung aufweist, durch welche das Halteelement formschlüssig am Montagegehäuse befestigt ist, insbesondere wobei die Aussparung eine längliche Erstreckung in einer Montagerichtung des Halteelementes mit einem freien Montageauslauf aufweist, so dass das Halteelement durch die Aussparung entlang der Montagerichtung in der Aussparung führbar ist. Das Halteelement kann insbesondere in einer zur Montagerichtung verschiedene Befestigungsrichtung, vorzugsweise in zwei zur Montagerichtung verschiedenen Befestigungsrichtungen, formschlüssig am Montagegehäuse in der Aussparung befestigt sein. Vorzugsweise verläuft die Aussparung zumindest teilweise bereichsweise umlaufend um die Sperrelementführung. Insbesondere bei einer klammerartigen Ausgestaltung des Halteelementes kann dadurch eine einfache und sichere Montage des Halteelementes ermöglicht sein. Gleichzeitig kann durch die Befestigung eine ausreichende Beweglichkeit des Ausweichelementes zum starren Gehäuseabschnitt ermöglicht sein. Unter dem freien Montageauslauf kann verstanden werden, dass die Aussparung in der Montagerichtung und/oder entgegengesetzt zur Montagerichtung nicht begrenzt ist, sodass das Halteelement in die Aussparung entlang der Montagerichtung einschiebbar ist. Somit kann durch die Aussparung eine formschlüssige Befestigungsmöglichkeit und gleichzeitig eine Montagehilfe gegeben sein.

Es ist ferner bei einer erfindungsgemäßen Verriegelungsvorrichtung denkbar, dass das Halteelement zumindest einen Klemmabschnitt zum Fixieren des Halteelements am Montagegehäuse, insbesondere in einer Montagerichtung des Halteelementes, aufweist. Der Klemmabschnitt kann bspw. eine Verengung eines Aufnahmebereiches des Halteelementes für die Sperrelementführung umfassen. Somit kann der Klemmabschnitt insbesondere zum Fixieren des Halteelementes am Ausweichelement und/oder am starren Gehäuseabschnitt ausgebildet sein. Vorzugsweise kann der Klemmabschnitt elastisch und/oder flexibel ausgebildet sein. Weiterhin ist es denkbar, dass der Klemmabschnitt eine Klemmkraft auf das Ausweichelement bewirkt, sodass das Ausweichelement gegen den starren Gehäuseabschnitt und/oder in die Öffnung des Montagegehäuses gedrückt wird. Somit kann eine einfache, bewegbare Montage des Ausweichelementes ermöglicht sein. Weiterhin kann das Ausweichelement durch den Klemmabschnitt auch in der Montagerichtung gesichert sein.

Es ist ferner bei einer erfindungsgemäßen Verriegelungsvorrichtung denkbar, dass ein Verstellmechanismus zum Verstellen des Sperrelementes zwischen einer Verriegelungsposition zum Verriegeln des funktionswesentlichen Bauteils und einer Entriegelungsposition zum Entriegeln des funktionswesentlichen Bauteils vorgesehen ist, wobei das Sperrelement ein Abrollmittel aufweist, durch welches das Sperrelement am Verstellmechanismus schwenkbar gelagert ist. Vorzugsweise kann der Verstellmechanismus eine Steuerkurve aufweisen, die mit dem Abrollmittel wirkt. Dabei kann durch die Steuerkurve vorgesehen sein, dass das Sperrelement in einem Normalbetrieb linear zwischen dem Verriegelungsposition und der Entriegelungsposition verstellt wird. Vorzugsweise kann der Verstellmechanismus einen Elektromotor aufweisen, um das Sperrelement beim Bewegen zwischen der Verriegelungsposition und der Entriegelungsposition anzutreiben. Durch das Abrollmittel kann die Kippbewegung des Sperrelementes insbesondere begünstigt sein. Dadurch kann sichergestellt sein, dass auch der Verstellmechanismus keine Beschädigung erfährt, wenn eine Kraft auf das Sperrelement wirkt, die die Kippbewegung bewirkt.

Es ist ferner bei einer erfindungsgemäßen Verriegelungsvorrichtung denkbar, dass der starre Gehäuseabschnitt des Montagegehäuses eine Befestigungsschnittstelle zur Befestigung des Montagegehäuses am Bauteilgehäuse aufweist, insbesondere wobei die Befestigungsschnittstelle an einer dem Ausweichelement gegenüberliegenden Seite der Sperrelementführung angeordnet ist. Die Befestigungsschnittstelle kann insbesondere zur Verschraubung des Montagegehäuses mit dem Bauteilgehäuse ausgebildet sein. Bspw. kann die Befestigungsschnittstelle eine Bohrung mit einem Gewinde umfassen. Durch die Positionierung der Befestigungsschnittstelle auf der dem Ausweichelement gegenüberliegenden Seiten der Sperrelementführung kann ferner der Freiraum auf der Seite des Ausweichelementes festgelegt werden. Insbesondere wenn es sich bei der Befestigungsschnittstelle um eine Schnittstelle zur Verschraubung handelt, kann das Montagegehäuse beim Befestigen entgegensetzt zum Freiraum bewegt werden, sodass sich der Freiraum vergrößert und insbesondere auf der Seite der Befestigungsschnittstelle reduziert wird. Insbesondere kann auf der gegenüberliegenden Seite des Freiraumes das Montagegehäuse direkt am Bauteilgehäuse anliegen. Dadurch kann sichergestellt sein, dass auf der gegenüberliegenden Seite des Ausweichelementes eine vorteilhafte Lastleitung auch bei einer entgegengesetzten Kippbewegung des Sperrelementes vom Montagegehäuse auf das Bauteilgehäuse erfolgen kann.

Es ist ferner bei einer erfindungsgemäßen Verriegelungsvorrichtung denkbar, dass das Montagegehäuse und/oder das Ausweichelement als Gussteil, insbesondere Zink-Druckgussteil, ausgestaltet ist. Bei dem Gussteil, insbesondere dem Zink-Druckgussteil, kann es sich um eine günstige Fertigungsmöglichkeit handeln, um das Montagegehäuse und/oder das Ausweichelement herzustellen. Vorzugsweise kann der starre Gehäuseabschnitt als Gussteil und/oder als Zink-Druckgussteil ausgestaltet sein. Beispielsweise kann der starre Gehäuseabschnitt und/oder das Ausweichelement eine Zamak-Legierung umfassen oder aus einer Zamak-Legierung bestehen. Dadurch kann insbesondere eine hohe konstruktive Festigkeit erzielt werden, wodurch die Widerstandskraft gegenüber Belastungen der Verriegelungsvorrichtungen weiter verbessert sein kann.

Vorzugsweise kann bei einer erfindungsgemäßen Verriegelungsvorrichtung vorgesehen sein, dass an einer dem Ausweichelement gegenüberliegenden Gehäuseinnenseite der Sperrelementführung zumindest ein Speichermittel zum Speichern eines Schmierstoffes angeordnet ist. Vorzugsweise kann es sich bei dem Speichermittel um eine Fetttasche handeln. Insbesondere können mehrere Speichermittel zum Speichern des Schmierstoffes an der Gehäuseinnenseite angeordnet sein. Zusätzlich oder alternativ ist es denkbar, dass das Ausweichmittel ein oder mehrere Speichermittel zum Speichern eines Schmierstoffes aufweist. Durch das Speichermittel kann z.B. Fett oder Öl in der Sperrelementführung vorgesehen sein, um einen verbesserten Lauf des Sperrbolzens zu ermöglichen. Insbesondere kann dabei auch bei der Kippbewegung des Sperrbolzens, wenn der Sperrbolzen mit dem Ausweichelement reibt, eine verbesserte Bewegung ermöglicht sein. Gleichzeitig kann dadurch ein Verschleiß reduziert sein, sodass eine Beschädigung der Verriegelungsvorrichtung insgesamt reduziert oder vermieden werden kann. Insbesondere, wenn es sich bei dem Montagegehäuse und/oder dem Ausweichelement um ein Gussteil handelt, kann durch das Ausweichelement somit ein verbesserter Zugang zu den Speichermitteln ermöglicht sein. Beispielsweise kann dadurch ferner eine Entformung vereinfacht sein, sodass die Speichermittel einstückig, z.B. als Aussparung, im Gussteil vorgesehen sein können. Auch eine Befüllung der Speichermittel kann dadurch vereinfacht sein, wenn eine Öffnung vorgesehen ist, um das Ausweichelement zu positionieren.

Gemäß einem weiteren Aspekt der Erfindung ist eine Funktionseinheit für ein Fahrzeug vorgesehen. Die Funktionseinheit umfasst ein für das Fahrzeug funktionswesentliches Bauteil und eine Verriegelungsvorrichtung für das funktionswesentliche Bauteil. Die Verriegelungsvorrichtung weist ein Sperrelement zum Verriegeln des funktionswesentlichen Bauteils und ein Montagegehäuse, in welchem das Sperrelement bewegbar angeordnet ist, auf. Das Montagegehäuse ist zumindest teilweise mit einem Freiraum zu einem Bauteilgehäuse für das funktionswesentliche Bauteil montiert. Ferner ist vorgesehen, dass das Montagegehäuse einen starren Gehäuseabschnitt und ein Ausweichelement aufweist. Das Ausweichelement ist bewegbar an dem starren Gehäuseabschnitt angeordnet, um einer Kippbewegung des Sperrelementes in Richtung des Freiraumes von einer Ruhelage in eine Ausweichlage auszuweichen.

Somit bringt eine erfindungsgemäße Funktionseinheit die gleichen Vorteile mit sich, wie sie bereits ausführlich mit Bezug auf eine erfindungsgemäße Verrieglungsvorrichtung beschrieben worden sind. Vorzugsweise handelt es sich bei der Funktionseinheit um eine Lenkeinheit und/oder eine Schalteinheit einer Gangschaltung für das Fahrzeug. Bei dem funktionswesentlichen Bauteil kann es sich daher bspw. um eine Lenksäule und/oder einen Gangschalthebel handeln. Insbesondere kann es sich bei dem funktionswesentlichen Bauteil um eine Baugruppe handeln. Das Montagegehäuse kann bspw. in dem Bauteilgehäuse montiert sein, sodass der Freiraum zwischen dem Bauteilgehäuse und dem Montagegehäuse ausgebildet ist. Insbesondere kann somit durch die Funktionseinheit die Sicherheit des Fahrzeugs verbessert sein, indem eine Bruchgefahr des Montagegehäuses reduziert ist oder vermieden wird.

Vorzugsweise kann bei einer erfindungsgemäßen Funktionseinheit vorgesehen sein, dass das Sperrelement zum Verriegeln des funktionswesentlichen Bauteils durch eine Zugangsöffnung des Bauteilgehäuses hindurchsteckbar ist, wobei das Ausweichelement in zumindest einer Raumrichtung, vorzugsweise in allen Raumrichtungen, eine Erstreckung aufweist, die größer ist, als ein Durchmesser der Zugangsöffnung. Insbesondere kann sich das Sperrelement beim Bewegen zwischen der Entriegelungsposition und der Verriegelungsposition durch die Zugangsöffnung bewegen. Durch die Größe des Ausweichelementes, die größer ist, als ein Durchmesser der Zugangsöffnung kann verhindert werden, dass das Ausweichelement durch die Zugangsöffnung zum funktionswesentlichen Bauteil hindurchfällt und dieses beschädigt oder dessen Funktion stört, selbst wenn das Halteelement und/oder das Ausweichelement beschädigt wird. Somit kann die Sicherheit der Funktionseinheit insgesamt verbessert sein. Bspw. kann vorgesehen sein, dass durch das Ausweichelement eine oder mehrere, vorzugsweise zwei, Seiten der Sperrbolzenführung gebildet sind, um ein Hindurchfallen des Ausweichelementes durch die Zugangsöffnung zu vermeiden oder die Wahrscheinlichkeit hierfür zu reduzieren.

Gemäß einem weiteren Aspekt der Erfindung ist ein Verfahren zum zerstörungsfreien Abstützen einer Bewegung eines funktionswesentlichen Bauteils eines Fahrzeuges vorgesehen. Das funktionswesentliche Bauteil ist dabei durch ein Sperrelement einer Verriegelungsvorrichtung, insbesondere einer erfindungsgemäßen Verriegelungsvorrichtung, verriegelt, wobei ein Montagegehäuse der Verriegelungsvorrichtung zumindest teilweise in einem Bauteilgehäuse für das funktionswesentliche Bauteil montiert ist, so dass ein Freiraum zwischen dem Bauteilgehäuse und dem Montagegehäuse ausgebildet ist. Ferner umfasst das Verfahren die folgenden Schritte:
- Übertragen einer Belastung des funktionswesentlichen Bauteils an das Sperrelement, so dass eine Kippbewegung des Sperrelementes in Richtung des Freiraumes erfolgt,
- Bewegen eines Ausweichelementes in Richtung des Freiraumes von einer Ruhelage in eine Ausweichlage, um der Kippbewegung des Sperrelementes auszuweichen,
- Abstützen des Sperrelementes am Bauteilgehäuse.

Beim Übertragen der Belastung des funktionswesentlichen Bauteils an das Sperrelement kann vorgesehen sein, dass das funktionswesentliche Bauteil gegen das Sperrelement drückt, sodass das Sperrelement die Kippbewegung ausführt. Dabei kann die Kippbewegung insbesondere ausgeführt werden, bis das Abstützen des Sperrelementes am Bauteilgehäuse stattfindet. Das Sperrelement kann direkt oder indirekt am Bauteilgehäuse abgestützt werden. Insbesondere kann vorgesehen sein, dass das Ausweichelement beim Abstützen des Sperrelementes zwischen dem Bauteilgehäuse und dem Sperrelement angeordnet ist, sodass das Abstützen des Sperrelementes am Bauteilgehäuse durch das Ausweichelement erfolgt. Das Bewegen des Ausweichelementes kann vorzugsweise als Schwenkbewegung erfolgen. Die Verriegelungsvorrichtung kann Teil einer erfindungsgemäßen Funktionseinheit sein. Somit bringt ein erfindungsgemäßes Verfahren die gleichen Vorteile mit sich, wie sie bereits ausführlich mit Bezug auf eine erfindungsgemäße Verriegelungsvorrichtung und/oder eine erfindungsgemäße Funktionseinheit für ein Fahrzeug beschrieben worden sind.

Weiterhin ist es bei einem erfindungsgemäßen Verfahren denkbar, dass das Verfahren folgenden Schritt umfasst:
- Zurückstellen des Ausweichelements von der Ausweichlage in die Ruhelage.

Vorzugsweise kann das Zurückstellen des Ausweichelementes von der Ausweichlage in die Ruhelage elastisch erfolgen. Insbesondere kann das Ausweichelement automatisch von der Ausweichlage in die Ruhelage zurückgestellt werden. Dadurch kann sichergestellt werden, dass z.B. eine Sperrbolzenführung ihre Funktion wieder vollständig aufnehmen kann, nachdem die Ausweichlage erreicht wurde und anschließend das Ausweichelement zurückgestellt wurde.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig.1: eine erfindungsgemäße Funktionseinheit mit einer erfindungsgemäßen Verriegelungsvorrichtung in einem montierten Zustand,
- Fig.2: die Funktionseinheit mit der Verriegelungsvorrichtung bei einer Montage
- Fig.3: die Funktionseinheit mit einem Ausweichelement in einer Ruhelage
- Fig. 4: die Funktionseinheit mit dem Ausweichelement in einer Ausweichlage
- Fig. 5+6: schematische Darstellungen der Verriegelungsvorrichtungen mit dem Ausweichelement in der Ruhelage und der Ausweichlage
- Fig. 7: ein Halteelement mit dem Ausweichelement bei der Montage
- Fig. 8: ein Halteelement mit einem Ausweichelement mit einer erfindungsgemäßen Verriegelungsvorrichtung in einem weiteren Ausführungsbeispiel bei der Montage
- Fig. 9: ein Fahrzeug mit einer erfindungsgemäßen Funktionseinheit und
- Fig. 10: ein erfindungsgemäßes Verfahren in schematischer Darstellung der Verfahrensschritte

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

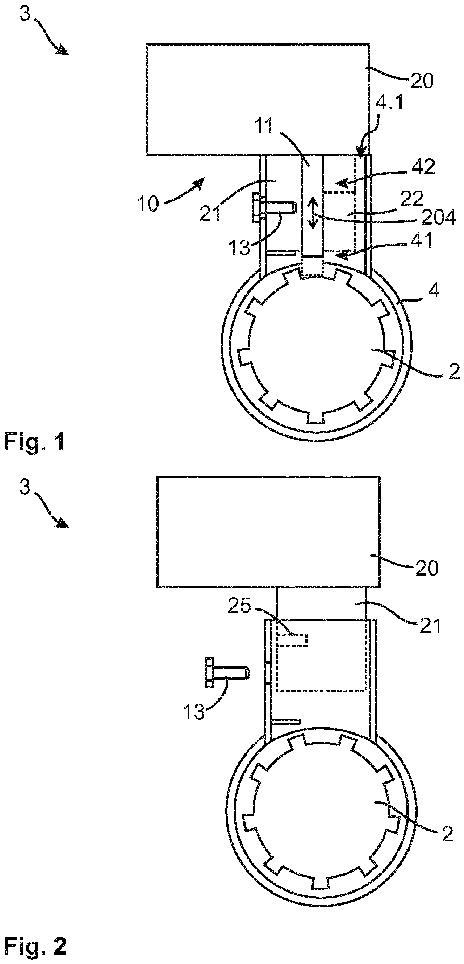

Die Figuren 1 und 2 zeigen eine erfindungsgemäße Funktionseinheit 3 mit einem für ein Fahrzeug 1 funktionswesentlichen Bauteil 2. Bei dem funktionswesentlichen Bauteil 2 kann es sich z.B. um eine Lenksäule und/oder einen Teil einer Gangschaltung handeln. Unter dem funktionswesentlichen Bauteil 2 kann dabei insbesondere ein Bauteil verstanden werden, welches sicherheitsrelevant ist und/oder ohne welches ein Betrieb des Fahrzeuges 1 unmöglich ist. Weiterhin weist die Funktionseinheit 3 eine erfindungsgemäße Verriegelungsvorrichtung 10 für das funktionswesentliche Bauteil 2 auf. Die Verriegelungsvorrichtung 10 umfasst gemäß Figur 1 ein Sperrelement 11 zum Verriegeln des funktionswesentlichen Bauteils 2. Dazu ist das Sperrelement 11 zwischen einer Verriegelungsposition 41 und einer Entriegelungsposition 42 in einem Montagegehäuse 20 der Verriegelungseinheit 10 bewegbar angeordnet. Insbesondere weist das Montagegehäuse 20 eine Sperrelementführung 21 zum Führen des Sperrelements 11 entlang einer Bewegungsrichtung 204 auf. Ferner ist die Sperrelementführung 21 in ein Bauteilgehäuse 4 des funktionswesentlichen Bauteils 2 einsteckbar. Dazu ist ein Spiel zwischen dem Bauteilgehäuse 4 und der Sperrelementführung 21 vorgesehen, welches insbesondere zwar minimal sein kann, jedoch ein Einstecken der Sperrelementführung 21 in das Bauteilgehäuse 4 ermöglicht. Dadurch kann die Sperrelementführung 21 z.B. zentrisch in eine Öffnung des Bauteilgehäuses 4 einführbar sein, wie in Figur 2 dargestellt. Die Sperrelementführung 21 weist ferner eine Befestigungsschnittstelle 25 auf, durch welche das Montagegehäuse 20 am Bauteilgehäuse 4 befestigbar ist. Vorzugsweise kann es sich bei der Befestigungsschnittstelle 25 um eine Schnittstelle zur Verschraubung handeln, sodass das Montagegehäuse 20 mit einem Befestigungsmittel 13, insbesondere in Form einer Schraube, am Bauteilgehäuse 4 fixiert werden kann. Dabei wird die Sperrelementführung 21 an der Befestigungsschnittstelle 25 am Bauteilgehäuse 4 direkt angeordnet, sodass auf der Befestigungsschnittstelle 25 gegenüberliegenden Seite der Sperrelementführung 21 ein Freiraum 4.1 zwischen dem Bauteilgehäuse 4 und der Sperrelementführung 21 entsteht.

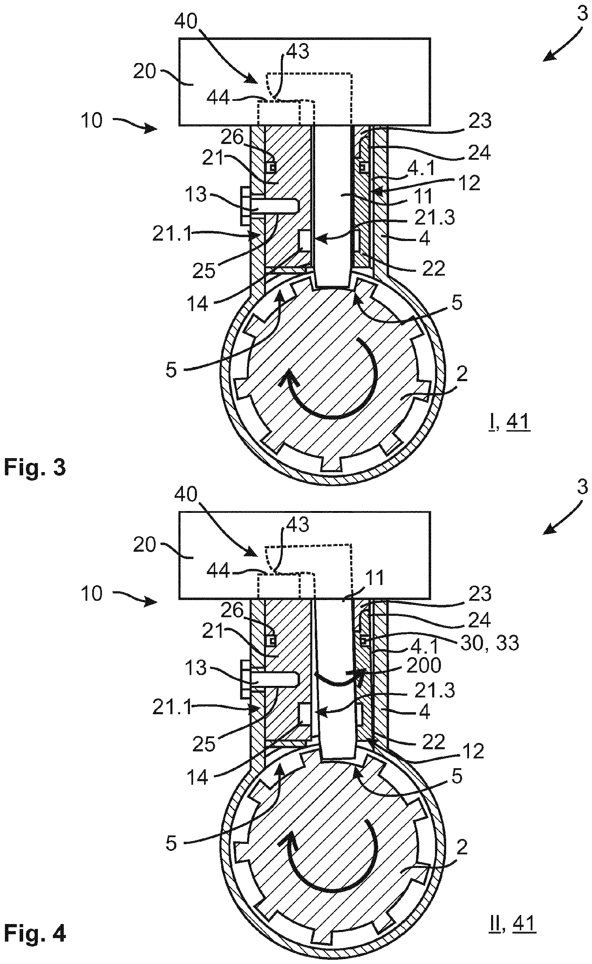

Figur 3 zeigt eine detailliertere Darstellung der erfindungsgemäßen Funktionseinheit 3, bei welcher sich das Sperrelement 11 in der Verriegelungsposition 41 befindet. Wie bereits in Figur 1 schematisch angedeutet, weist das Montagegehäuse 20 einen starren Gehäuseabschnitt 23 und ein Ausweichelement 22 auf. Das Ausweichelement 22 ist durch ein vom starren Gehäuseabschnitt 23 separates Einsatzteil gebildet und in Figur 3 in einer Ruhelage I dargestellt, in welcher das Ausweichelement 22 eine Öffnung 12 des Montagegehäuses 20 zumindest bereichsweise verschließt. Dadurch bildet das Ausweichelement 22 in der Ruhelage I einen Gehäuseteil der Sperrelementführung 21, durch den das Sperrelement 11 zumindest bereichsweise führbar ist. Die Befestigungsschnittstelle 25 ist dabei auf einer dem Ausweichelement 22 gegenüberliegenden Seite 21.1 der Sperrelementführung 21 angeordnet. Ferner weisen der starre Gehäuseabschnitt 23 und das Ausweichelement 22 Speichermittel 14 auf, in welchen ein Schmierstoff speicherbar ist. Insbesondere können die Speichermittel 14 als sog. Fetttaschen zur Aufnahme von Schmierfett ausgeformt sein. Das Speichermittel 14 des starren Gehäuseabschnittes 23 ist vorzugsweise an einer Gehäuseinnenseite 21.3 der Sperrelementführung 21 angeordnet, um eine Entformung des starren Gehäuseabschnittes 23 bei der Fertigung und/oder eine Befüllung des Speichermittels 14 zu begünstigen. Vorzugsweise kann es sich bei dem starren Gehäuseabschnitt 23 und/oder dem Ausweichelement 22 um Gussteile, insbesondere in Form von Zink-Druckgussteilen, handeln.

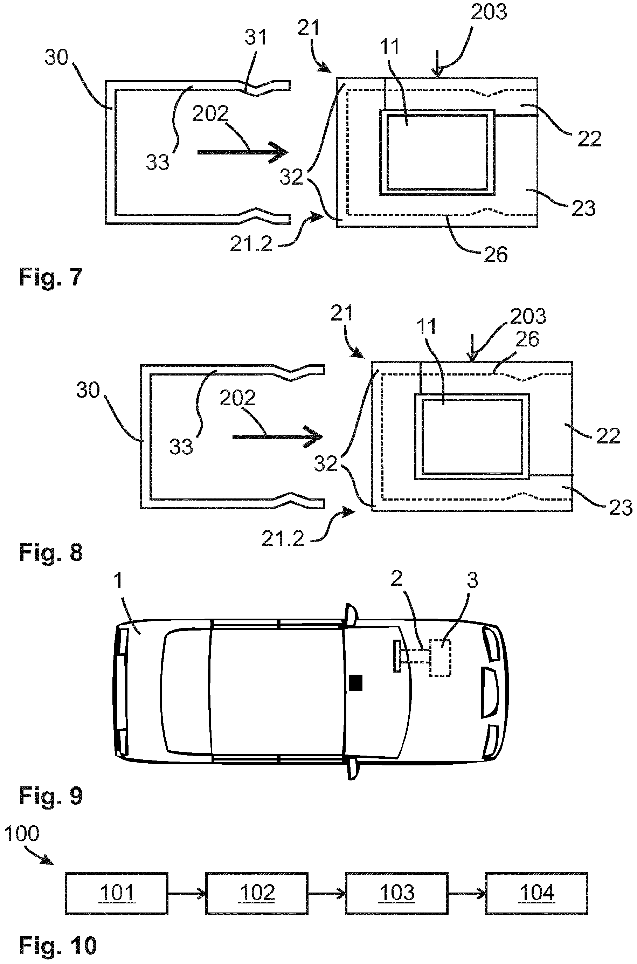

Figur 10 zeigt ferner ein Verfahren 100 zum zerstörungsfreien Abstützen einer Bewegung des funktionswesentlichen Bauteils 2 des Fahrzeuges 1 bei der Funktionseinheit 3 in schematischer Darstellung der Verfahrensschritte. Das Verfahren 100 wird nachfolgend mit Bezug auf die Funktionseinheit 3 beschrieben.

Wirkt eine Belastung auf das funktionswesentliche Bauteil 2, dann erfolgt ein Übertragen 101 der Belastung, indem das funktionswesentliche Bauteil 2 gegen das Sperrelement 11 drückt, sodass das Sperrelement 11 eine Kippbewegung 200 durchführt. Das Ausweichelement 22 ist ferner bewegbar am starren Gehäuseabschnitt 23 angeordnet, um dem Sperrelement 11 bei der Kippbewegung 200 von der Ruhelage I in Richtung des Freiraumes 4.1 in eine Ausweichlage II, wie in Figur 4 dargestellt, auszuweichen. Das Ausweichen umfasst dabei ein Bewegen 102 des Ausweichelementes 22 in Richtung des Freiraumes 4.1, bis ein Abstützen 103 des Sperrelementes 11 am Bauteilgehäuse 4 durch das Ausweichelement 22 erfolgt.

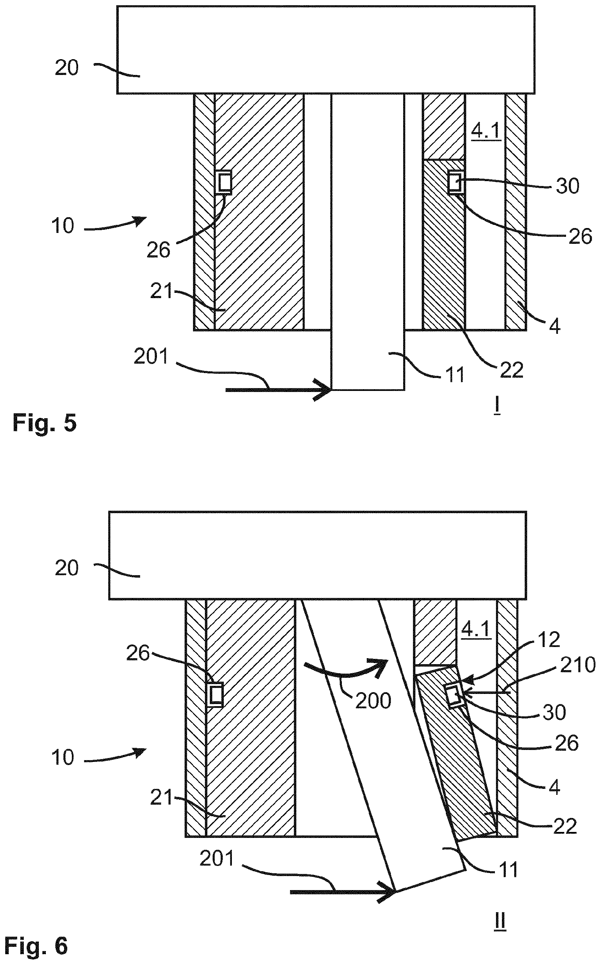

Zur besseren Verdeutlichung zeigen die Figuren 5 und 6 die Ruhelage I und die Ausweichlage II in schematischer Darstellung der Verriegelungsvorrichtung 10. Wirkt eine Querkraft entlang einer Belastungsrichtung 201 auf das Sperrelement 11, drückt das Sperrelement 11 gegen das Ausweichelement 22. Das Ausweichelement 22 führt daraufhin eine Schwenkbewegung in Richtung des Freiraumes 4.1 aus, sodass der Freiraum 4.1 durch das Ausweichelement 22 überbrückt wird. Dabei stößt das Ausweichelement 22 über den Freiraum 4.1 an dem Bauteilgehäuse 4 an. Dadurch ist das Sperrelement 11 in der Ausweichlage II des Ausweichelementes 22 durch das Ausweichelement 22 über den Freiraum 4.1 am Bauteilgehäuse 4 abstützbar. Wie in den Figuren 3 und 4 detaillierter dargestellt, kann das Ausweichelement 22 vorzugsweise einen Scharnierabschnitt 24 aufweisen, mit dem das Ausweichelement 22 schwenkbeweglich am starren Gehäuseabschnitt 23 gelagert ist. Dabei kann das Ausweichelement 22 bei der Montage lose am starren Gehäuseabschnitt 23 angeordnet werden. Weiterhin ist ein elastisches Rückstellmittel 33 zum Zurückstellen 104 des Ausweichelementes 22 von der Ausweichlage II in die Ruhelage I am Montagegehäuse 20 angeordnet. Durch das Rückstellmittel 33 ist das Ausweichelement 22 daher von der Ausweichlage II in die Ruhelage I, insbesondere automatisch, bewegbar. Das Rückstellmittel 33 bewirkt in der Ausweichlage II des Ausweichelementes 22 eine Rückstellkraft 210 auf das Ausweichelement 22, um eine automatische Rückstellung des Ausweichelementes 22 von der Ausweichlage II in die Ruhelage I zu initiieren. Zum Fixieren des Ausweichelementes 22 am starren Gehäuseabschnitt 23 ist ein Halteelement 30 vorgesehen, mit dem das Rückstellmittel 33 einstückig ausgestaltet ist. Insbesondere bildet das Rückstellmittel 33 einen elastischen Abschnitt des Halteelementes 30. Der starre Gehäuseabschnitt 23 und das Ausweichelement 22 weisen ferner eine Aussparung 26 auf, durch die das Halteelement 30 formschlüssig am Montagegehäuse 23 befestigt ist. Dabei kann die Aussparung 26 insbesondere kanalartig ausgestaltet sein, sodass ein Formschluss in zwei Richtungen, insbesondere in der Bewegungsrichtung 204 des Sperrelementes 11 beim Verstellen zwischen der Verriegelungsposition und der Entriegelungsposition 41, 42, bewirkt wird.

Figur 7 zeigt dabei auf Draufsicht auf das Halteelement 30 und die Sperrelementführung 21 bei der Montage des Halteelementes 30. Dabei wird das Ausweichelement 22 durch das Halteelement 30 in einer Befestigungsrichtung 203 am starren Gehäuseabschnitt 23 gesichert. Die Aussparung 26 weist eine längliche Erstreckung in einer Montagerichtung 202 des Halteelementes 30 mit einem freien Montageauslauf 32 auf, der auf einer Montageseite 21.2 der Sperrelementführung 21 angeordnet ist. Durch den freien Montageauslauf 32 ist das Halteelement 30 auf die Sperrelementführung 21 in einfacher Art und Weise aufsteckbar, sodass das Halteelement 30 durch die Aussparung 26 entlang der Montagerichtung 202 in der Aussparung 26 führbar ist. Weiterhin weist das Halteelement 30 einen Klemmabschnitt 31 zum Fixieren des Halteelementes 30 am Montagegehäuse 20, insbesondere in einer Montagerichtung 202 des Halteelementes 30, auf. Dadurch kann das Ausweichelement 22 form- und/oder kraftschlüssig am starren Gehäuseabschnitt 23 fixiert sein. Das Halteelement 30 umgreift die Sperrelementführung 21 im Montagezustand klammerartig. Dabei weist das Halteelement 30 zumindest einen flexiblen und/oder elastischen Abschnitt auf, welcher gemäß der Darstellung in Figur 6 bei der Schwenkbewegung des Ausweichelementes 22 elastisch verstellbar ist. Dadurch ist eine Bewegungsmöglichkeit des Ausweichelementes 22 in der Belastungsrichtung 201 bzw. in Richtung des Freiraumes 4.1 gegeben.

Um die Kippbewegung des Sperrelementes 11 zu begünstigen und insbesondere eine Beschädigung der Verriegelungsvorrichtung 10 zu vermeiden, weist ein Verriegelungsmechanismus 40 zum Verstellen des Sperrelementes 11 zwischen der Verriegelungsposition 41 und der Entriegelungsposition 42 eine Steuerkurve 44 auf, auf welcher das Sperrelement 11 geführt ist. Der Verstellmechanismus 40 ist vorzugsweise im Montagegehäuse 20 angeordnet. Das Sperrelement 11 weist ferner ein Abrollmittelmittel 43 auf, durch welches das Sperrelement 11 auf der Steuerkurve 44 abrollen kann, um eine verschwenkbare Lagerung des Sperrelementes 11 am Verstellmechanismus 40 zu begünstigen. Somit kann dem Sperrelement 11 durch den Verstellmechanismus 40 sogar der Bewegungsfreiraum für die Kippbewegung 200 eingeräumt werden. Durch das Ausweichelement 22 wird dabei eine Beschädigung des Montagegehäuses 20 durch eine Belastung in Richtung des Freiraumes 4.1 vermieden oder reduziert.

Figur 8 zeigt eine Sperrelementführung 21 einer erfindungsgemäßen Verriegelungsvorrichtung 10 in einer Draufsicht bei der Montage des Halteelementes 30. Dabei erstreckt sich das Ausweichelement 22 über zumindest zwei Seiten der Sperrelementführung 21, wodurch das Ausweichelement in zumindest zwei Raumrichtungen eine Erstreckung aufweist, die größer ist, als ein Durchmesser einer Zugangsöffnung 5, durch welche das Sperrelement 11 zum Verriegeln des funktionswesentlichen Bauteils 2 hindurchsteckbar ist. Dadurch kann selbst bei Verlust des Halteelementes 30 oder bei einer Beschädigung des Ausweichelementes 22 das Ausweichelement 22 nicht durch die Zugangsöffnung 5 in Richtung des funktionswesentlichen Bauteils 2 fallen und dieses beschädigen oder dessen Funktion blockieren.

Figur 9 zeigt ein Fahrzeug 1 mit einer erfindungsgemäßen Funktionseinheit 3 in Form eines Lenkgetriebes. Dabei ist ein funktionswesentliches Bauteil 2 durch eine Lenksäule des Fahrzeugs 1 gebildet. Vorzugsweise ist die Funktionseinheit 3 gemäß einem der voranstehend beschriebenen Ausführungsbeispiele ausgestaltet. Dadurch kann die Sicherheit des Fahrzeuges 1 insgesamt gesteigert sein, wenn eine unbefugte Betätigung des funktionswesentlichen Bauteils 2 nicht zur Beschädigung einer Verriegelungsvorrichtung 10 der Funktionseinheit 3 führt.

Voranstehende Erläuterung der Ausführungsformen beschreibt die Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 2: funktionswesentliches Bauteil
- 3: Lenkradverriegelung
- 4: Bauteilgehäuse
- 4.1: Freiraum
- 5: Zugangsöffnung

- 10: Verriegelungsvorrichtung
- 11: Sperrelement
- 12: Öffnung
- 13: Befestigungsmittel
- 14: Speichermittel

- 20: Montagegehäuse
- 21: Sperrelementführung
- 21.1: Seite von 21
- 21.2: Montageseite
- 21.3: Gehäuseinnenseite
- 22: Ausweichelement
- 23: starrer Gehäuseabschnitt
- 24: Scharnierabschnitt
- 25: Befestigungsschnittstelle
- 26: Führungsnut

- 30: Halteelement
- 31: Formschlussabschnitt
- 32: Montageauslauf
- 33: Rückstellmittel

- 40: Verstellmechanismus
- 41: Verriegelungsposition
- 42: Entriegelungsposition
- 43: Abrollmittel

- 100: Verfahren
- 101: Übertragen
- 102: Bewegen von 22
- 103: Abstützen von 11 an 3
- 104: Zurückstellen von 22

- 200: Kippbewegung
- 201: Belastungsrichtung
- 202: Montagerichtung
- 203: Befestigungsrichtung

- 210: Rückstellkraft

- I: Ruhezustand
- II: Ausweichzustand

## Patentansprüche

1. Verriegelungsvorrichtung (10) für ein funktionswesentliches Bauteil (2) eines Fahrzeuges (1), aufweisend
ein Sperrelement (11) zum Verriegeln des funktionswesentlichen Bauteils (2), und
ein Montagegehäuse (20), in welchem das Sperrelement (11) zum Verriegeln des funktionswesentlichen Bauteils (2) bewegbar angeordnet ist,
wobei das Montagegehäuse (20) zumindest teilweise mit einem Freiraum (4.1) zu einem Bauteilgehäuse (4) für das funktionswesentliche Bauteil (2) montierbar ist,
**dadurch gekennzeichnet,**
**dass** das Montagegehäuse (20) einen starren Gehäuseabschnitt (23) und ein Ausweichelement (22) aufweist, wobei das Ausweichelement (22) bewegbar an dem starren Gehäuseabschnitt (23) angeordnet ist, um einer Kippbewegung (200) des Sperrelementes (11) in Richtung des Freiraumes (4.1) von einer Ruhelage (I) in eine Ausweichlage (II) auszuweichen.

2. Verriegelungsvorrichtung (10) nach Anspruch 1,
**dadurch gekennzeichnet,**
**dass** das Ausweichelement (22) durch ein vom starren Gehäuseabschnitt (23) separates Einsatzteil gebildet ist.

3. Verriegelungsvorrichtung (10) nach einem der vorhergehenden Ansprüche,
**dadurch gekennzeichnet,**
**dass** das Montagegehäuse (20) eine Sperrelementführung (21) zum Führen des Sperrelementes (11) aufweist, welche in das Bauteilgehäuse (4) einsteckbar ist, so dass der Freiraum (4.1) zwischen der Sperrelementführung (21) und dem Bauteilgehäuse (4) ausgebildet wird, insbesondere wobei das Ausweichelement (22) in der Ruhelage (I) einen Gehäuseteil der Sperrelementführung (21) bildet, durch welchen das Sperrelement (11) zumindest bereichsweise führbar ist.

4. Verriegelungsvorrichtung (10) nach einem der vorhergehenden Ansprüche,
**dadurch gekennzeichnet,**
**dass** das Ausweichelement (22) einen Scharnierabschnitt (24) aufweist, mit welchem das Ausweichelement (22), insbesondere schwenkbeweglich, am starren Gehäuseabschnitt (23) gelagert ist,
und/oder dass in der Ruhelage (I) eine Öffnung (12) des Montagegehäuses (20) durch das Ausweichelement (22) zumindest bereichsweise verschlossen ist und in der Ausweichlage (II) zumindest bereichsweise geöffnet ist,
und/oder dass das Sperrelement (11), insbesondere in der Ausweichlage (II) des Ausweichelementes (22), durch das Ausweichelement (22) über den Freiraum (4.1) am Bauteilgehäuse (4) abstützbar ist.

5. Verriegelungsvorrichtung (10) nach einem der vorhergehenden Ansprüche,
**dadurch gekennzeichnet,**
**dass** am Montagegehäuse (20) ein, vorzugsweise elastisches, Rückstellmittel (33) angeordnet ist, durch welches das Ausweichelement (22) von der Ausweichlage (II) in die Ruhelage (I) bewegbar ist, insbesondere wobei das Rückstellmittel (33) in der Ausweichlage (II) des Ausweichelementes (22) eine Rückstellkraft (210) auf das Ausweichelement (22) bewirkt.

6. Verriegelungsvorrichtung (10) nach einem der vorhergehenden Ansprüche,
**dadurch gekennzeichnet,**
**dass** ein Halteelement (30) vorgesehen ist, durch welches das Ausweichelement (22) zumindest in der Ruhelage (I) am starren Gehäuseabschnitt (23) fixiert ist, insbesondere wobei das Halteelement (30) einstückig und/oder einteilig mit dem Rückstellmittel (33) ausgebildet ist,
und/oder dass das Halteelement (30) von einer Montageseite (21.2) auf die Sperrelementführung (21) aufsteckbar ist, um das Ausweichelement (22) lösbar am starren Gehäuseabschnitt (23) zu fixieren, insbesondere wobei das Halteelement (30) die Sperrelementführung (21) klammerartig umgreift.

7. Verriegelungsvorrichtung (10) nach einem der vorhergehenden Ansprüche,
**dadurch gekennzeichnet,**
**dass** der starre Gehäuseabschnitt (23) und/oder das Ausweichelement (22) eine Aussparung (26) aufweist, durch welche das Halteelement (30) formschlüssig am Montagegehäuse (20) befestigt ist, insbesondere wobei die Aussparung (26) in einer Montagerichtung (20) eine längliche Erstreckung in einer Montagerichtung (202) des Halteelementes (30) mit einem freien Montageauslauf (32) aufweist, so dass das Halteelements (30) durch die Aussparung (26) entlang einer Montagerichtung (202) in der Aussparung (26) führbar ist.

8. Verriegelungsvorrichtung (10) nach einem der vorhergehenden Ansprüche,
**dadurch gekennzeichnet,**
**dass** das Halteelement (30) zumindest einen Klemmabschnitt (31) zum Fixieren des Halteelements (30) am Montagegehäuse (20), insbesondere in einer Montagerichtung (202) des Halteelementes (30), aufweist.

9. Verriegelungsvorrichtung (10) nach einem der vorhergehenden Ansprüche,
**dadurch gekennzeichnet,**
**dass** ein Verstellmechanismus (40) zum Verstellen des Sperrelementes (11) zwischen einer Verriegelungsposition (41) zum Verriegeln des funktionswesentlichen Bauteils (2) und einer Entriegelungsposition (42) zum Entriegeln des funktionswesentlichen Bauteils (2) vorgesehen ist, wobei das Sperrelement (11) ein Abrollmittel (43) aufweist, durch welches das Sperrelement (11) am Verstellmechanismus (40) schwenkbar gelagert ist.

10. Verriegelungsvorrichtung (10) nach einem der vorhergehenden Ansprüche,
**dadurch gekennzeichnet,**
**dass** der starre Gehäuseabschnitt (23) des Montagegehäuses (20) eine Befestigungsschnittstelle (25) zur Befestigung des Montagegehäuses (20) am Bauteilgehäuse (4) aufweist, insbesondere wobei die Befestigungsschnittstelle (25) an einer dem Ausweichelement (22) gegenüberliegenden Seite (21.1) der Sperrelementführung (21) angeordnet ist.

11. Verriegelungsvorrichtung (10) nach einem der vorhergehenden Ansprüche,
**dadurch gekennzeichnet,**
**dass** das Montagegehäuse (20) und/oder das Ausweichelement (22) als Gussteil, insbesondere Zink-Druckgussteil, ausgestaltet ist,
und/oder dass an einer dem Ausweichelement (22) gegenüberliegenden Gehäuseinnenseite (21.3) der Sperrelementführung (21) zumindest ein Speichermittel (14) zum Speichern eines Schmierstoffes angeordnet ist.

12. Funktionseinheit (3) für ein Fahrzeug (1) aufweisend
ein für das Fahrzeug (1) funktionswesentliches Bauteil (2) und
eine Verriegelungsvorrichtung (10) für das funktionswesentliche Bauteil (2), mit einem Sperrelement (11) zum Verriegeln des funktionswesentlichen Bauteils (2), und einem Montagegehäuse (20), in welchem das Sperrelement (11) bewegbar angeordnet ist, wobei das Montagegehäuse (20) zumindest teilweise mit einem Freiraum (4.1) zu einem Bauteilgehäuse (4) für das funktionswesentliche Bauteil (2) montiert ist,
**dadurch gekennzeichnet,**
**dass** das Montagegehäuse (20) einen starren Gehäuseabschnitt (23) und ein Ausweichelement (22) aufweist, wobei das Ausweichelement (22) bewegbar an dem starren Gehäuseabschnitt (23) angeordnet ist, um einer Kippbewegung (200) des Sperrelementes (11) in Richtung des Freiraumes (4.1) von einer Ruhelage (I) in eine Ausweichlage (II) auszuweichen.

13. Funktionseinheit (3) nach Anspruch 12,
**dadurch gekennzeichnet,**
**dass** das Sperrelement (11) zum Verriegeln des funktionswesentlichen Bauteils (2) durch eine Zugangsöffnung (5) des Bauteilgehäuses (4) hindurchsteckbar ist, wobei das Ausweichelement (22) in zumindest einer Raumrichtung, vorzugsweise in allen Raumrichtungen, eine Erstreckung aufweist, die größer ist, als ein Durchmesser der Zugangsöffnung (5).

14. Verfahren (100) zum zerstörungsfreien Abstützen einer Bewegung eines funktionswesentlichen Bauteils (2) eines Fahrzeuges (1), das durch ein Sperrelement (11) einer Verriegelungsvorrichtung (10), insbesondere nach einem der Ansprüche 1 bis 11, verriegelt ist, wobei ein Montagegehäuse (20) der Verriegelungsvorrichtung (10) zumindest teilweise in einem Bauteilgehäuse (4) für das funktionswesentliche Bauteil (2) montiert ist, so dass ein Freiraum (4.1) zwischen dem Bauteilgehäuse (4) und dem Montagegehäuse (20) ausgebildet ist, umfassend die folgenden Schritte:
- Übertragen (101) einer Belastung des funktionswesentlichen Bauteils (2) an das Sperrelement (11), so dass eine Kippbewegung (200) des Sperrelementes (11) in Richtung des Freiraumes (4.1) erfolgt,
- Bewegen (102) eines Ausweichelementes (22) in Richtung des Freiraumes (4.1) von einer Ruhelage (I) in eine Ausweichlage (II), um der Kippbewegung (200) des Sperrelementes (11) auszuweichen,
- Abstützen (103) des Sperrelementes (11) am Bauteilgehäuse (3).

15. Verfahren nach Anspruch 14,
**dadurch gekennzeichnet,**
**dass** das Verfahren (100) folgenden Schritt umfasst:
Zurückstellen (104) des Ausweichelements (22) von der Ausweichlage (II) in die Ruhelage (I).

## Claims

1. Locking device (10) for a functionally essential component (2) of a vehicle (1), comprising
a locking element (11) for locking the functionally essential component (2), and
a mounting housing (20) in which the locking element (11) for locking the functionally essential component (2) is movably arranged,
wherein the mounting housing (20) is mountable at least partially with a free space (4.1) to a component housing (4) for the functionally essential component (2),
**characterized in that,**
the mounting housing (20) has a rigid housing section (23) and a dodging element (22), the dodging element (22) being arranged movably on the rigid housing section (23) in order to dodge a tilting movement (200) of the locking element (11) in the direction of the free space (4.1) from a rest position (I) into a dodging position (II).

2. Locking device (10) according to claim 1,
**characterized in that**
the dodging element (22) is formed by an insert part separate from the rigid housing section (23).

3. Locking device (10) according to any one of the preceding claims,
**characterized in that**
the mounting housing (20) has a blocking element guide (21) for guiding the blocking element (11), which can be inserted into the component housing (4), so that the free space (4.1) is formed between the blocking element guide (21) and the component housing (4), in particular the dodging element (22) forming, in the rest position (I), a housing part of the blocking element guide (21) through which the blocking element (11) can be guided at least in regions.

4. Locking device (10) according to any one of the preceding claims,
**characterized in that**
the dodging element (22) has a hinge section (24) with which the dodging element (22) is mounted on the rigid housing section (23), in particular in a pivotable manner,
and/or **in that** in the rest position (I) an opening (12) of the mounting housing (20) is closed at least in regions by the dodging element (22) and in the dodging position (II) is opened at least in regions,
and/or **in that** the locking element (11), in particular in the dodging position (II) of the dodging element (22), can be supported by the dodging element (22) via the free space (4.1) on the component housing (4).

5. Locking device (10) according to any one of the preceding claims,
**characterized in that**
a, preferably elastic, restoring means (33) is arranged on the mounting housing (20), by means of which restoring means (33) the dodging element (22) can be moved from the dodging position (II) into the rest position (I), in particular the restoring means (33) producing a restoring force (210) on the dodging element (22) in the dodging position (II) of the dodging element (22).

6. Locking device (10) according to any one of the preceding claims,
**characterized in that**
a retaining element (30) is provided, by means of which the dodging element (22) is fixed to the rigid housing section (23) at least in the rest position (I), in particular the retaining element (30) being formed integrally and/or in one piece with the restoring means (33),
and/or **in that** the retaining element (30) can be plugged onto the locking element guide (21) from a mounting side (21.2) in order to fix the dodging element (22) releasably to the rigid housing section (23), in particular with the retaining element (30) engaging around the locking element guide (21) in the manner of a clamp.

7. Locking device (10) according to any one of the preceding claims,
**characterized in that**
the rigid housing section (23) and/or the dodging element (22) has a recess (26) through which the retaining element (30) is positively fastened to the mounting housing (20), in particular wherein the recess (26) has an elongated extension in a mounting direction (202) of the retaining element (30) with a free mounting run-out (32), so that the retaining element (30) can be guided through the recess (26) along a mounting direction (202) in the recess (26).

8. Locking device (10) according to any one of the preceding claims,
**characterized in that**
the retaining element (30) has at least one clamping section (31) for fixing the retaining element (30) to the mounting housing (20), in particular in a mounting direction (202) of the retaining element (30).

9. Locking device (10) according to any one of the preceding claims,
**characterized in that**
an adjusting mechanism (40) is provided for adjusting the locking element (11) between a locking position (41) for locking the functionally essential component (2) and an unlocking position (42) for unlocking the functionally essential component (2), the locking element (11) having a rolling means (43) by means of which the locking element (11) is mounted pivotably on the adjusting mechanism (40).

10. Locking device (10) according to any one of the preceding claims,
**characterized in that**
the rigid housing section (23) of the mounting housing (20) has a fastening interface (25) for fastening the mounting housing (20) to the component housing (4), in particular the fastening interface (25) being arranged on a side (21.1) of the locking element guide (21) opposite the dodging element (22).

11. Locking device (10) according to any one of the preceding claims,
**characterized in that**
the mounting housing (20) and/or the dodging element (22) is designed as a casting, in particular a zinc die-casting,
and/or **in that** at least one storage means (14) for storing a lubricant is arranged on a housing inner side (21.3) of the locking element guide (21) opposite the dodging element (22).

12. Functional unit (3) for a vehicle (1) comprising
a functionally essential component (2) which is essential to the function of the vehicle (1), and
a locking device (10) for the functionally essential component (2), with
a locking element (11) for locking the functionally essential component (2), and
a mounting housing (20) in which the locking element (11) is movably arranged, the mounting housing (20) being mounted at least partially with a free space (4.1) to a component housing (4) for the functionally essential component (2),
**characterized in that,**
the mounting housing (20) has a rigid housing section (23) and a dodging element (22), the dodging element (22) being arranged movably on the rigid housing section (23) in order to dodge a tilting movement (200) of the locking element (11) in the direction of the free space (4.1) from a rest position (I) into a dodging position (II).

13. Functional unit (3) according to claim 12,
**characterized in that**
the locking element (11) for locking the functionally essential component (2) can be pushed through an access opening (5) of the component housing (4), the dodging element (22) having, in at least one spatial direction, preferably in all spatial directions, an extent which is greater than a diameter of the access opening (5).

14. Method (100) for non-destructively supporting a movement of a functionally essential component (2) of a vehicle (1) which is locked by a locking element (11) of a locking device (10), in particular according to one of claims 1 to 11, wherein a mounting housing (20) of the locking device (10) is at least partially mounted in a component housing (4) for the functionally essential component (2) so that a free space (4.1) is formed between the component housing (4) and the mounting housing (20), comprising the following steps:
- transmitting (101) a load of the functionally essential component (2) to the locking element (11), so that a tilting movement (200) of the locking element (11) takes place in the direction of the free space (4.1),
- moving (102) a dodging element (22) in the direction of the free space (4.1) from a rest position (I) to a dodging position (II) to dodge the tilting movement (200) of the locking element (11),
- support (103) of the locking element (11) on the component housing (3).

15. The method of claim 14,
**characterized in that**
the method (100) comprises the following step:
returning (104) the dodging element (22) from the dodging position (II) to the rest position (I).

## Revendications

1. Dispositif de verrouillage (10) pour un composant (2) essentiel à la fonction d'un véhicule (1), présentant
un élément de blocage (11) pour verrouiller le composant (2) essentiel à la fonction (2), et
un boîtier de montage (20) dans lequel l'élément de blocage (11) est disposé de manière mobile pour verrouiller le composant (2) essentiel à la fonction,
le boîtier de montage (20) pouvant être monté au moins partiellement avec un espace libre (4.1) vers un boîtier de composant (4) pour le composant (2) essentiel à la fonction,
**caractérisé en ce que,**
le boîtier de montage (20) présente une section de boîtier rigide (23) et un élément d'évitement (22), l'élément d'évitement (22) étant disposé de manière mobile sur la section de boîtier rigide (23), afin d'éviter un mouvement de basculement (200) de l'élément de blocage (11) en direction de l'espace libre (4.1) d'une position de repos (I) dans une position d'évitement (II).

2. Dispositif de verrouillage (10) selon la revendication 1,
**caractérisé en ce que**
l'élément d'évitement (22) est formé par une pièce d'insertion séparée de la section de boîtier rigide (23).

3. Dispositif de verrouillage (10) selon l'une quelconque des revendications précédentes,
**caractérisé en ce que**
le boîtier de montage (20) présente un guide d'élément de blocage (21) pour guider l'élément de blocage (11), qui peut être enfiché dans le boîtier de composant (4), de sorte que l'espace libre (4.1) est formé entre le guide d'élément de blocage (21) et le boîtier de composant (4), en particulier l'élément d'évitement (22) formant dans la position de repos (I) une partie de boîtier du guide d'élément de blocage (21), à travers laquelle l'élément de blocage (11) peut être guidé au moins par zones.

4. Dispositif de verrouillage (10) selon l'une quelconque des revendications précédentes, **caractérisé en ce que**
l'élément d'évitement (22) présente une section de charnière (24) avec laquelle l'élément d'évitement (22) est monté, en particulier de manière pivotante, sur la section de boîtier rigide (23),
et/ou **en ce que**, dans la position de repos (I), une ouverture (12) du boîtier de montage (20) est fermée au moins par zones par l'élément d'évitement (22) et est ouverte au moins par zones dans la position d'évitement (II),
et/ou **en ce que** l'élément de blocage (11), en particulier dans la position d'évitement (II) de l'élément d'évitement (22), peut être soutenu par l'élément d'évitement (22) via l'espace libre (4.1) sur le boîtier de composant (4).

5. Dispositif de verrouillage (10) selon l'une quelconque des revendications précédentes, **caractérisé en ce que**
sur le boîtier de montage (20) est disposé un moyen de rappel (33), de préférence élastique, par lequel l'élément d'évitement (22) peut être déplacé de la position d'évitement (II) à la position de repos (I), en particulier le moyen de rappel (33) exerçant une force de rappel (210) sur l'élément d'évitement (22) dans la position d'évitement (II) de l'élément d'évitement (22).

6. Dispositif de verrouillage (10) selon l'une quelconque des revendications précédentes, **caractérisé en ce qu'**
il est prévu un élément de retenue (30) par lequel l'élément d'évitement (22) est fixé au moins dans la position de repos (I) sur la section de boîtier rigide (23), en particulier l'élément de retenue (30) étant réalisé d'une seule pièce et/ou en une seule partie avec le moyen de rappel (33),
et/ou **en ce que** l'élément de retenue (30) peut être enfiché d'un côté de montage (21.2) sur le guide d'élément de blocage (21), afin de fixer de manière amovible l'élément d'évitement (22) sur la section de boîtier rigide (23), en particulier l'élément de retenue (30) entourant le guide d'élément de blocage (21) à la manière d'une pince.

7. Dispositif de verrouillage (10) selon l'une quelconque des revendications précédentes, **caractérisé en ce que**
la section de boîtier rigide (23) et/ou l'élément d'évitement (22) présente un évidement (26) à travers lequel l'élément de retenue (30) est fixé par complémentarité de forme au boîtier de montage (20), en particulier, l'évidement (26) présentant dans une direction de montage (20) une extension longitudinale dans une direction de montage (202) de l'élément de retenue (30) avec une sortie de montage libre (32), de sorte que l'élément de retenue (30) peut être guidé à travers l'évidement (26) le long d'une direction de montage (202) dans l'évidement (26).

8. Dispositif de verrouillage (10) selon l'une quelconque des revendications précédentes, **caractérisé en ce que**
l'élément de retenue (30) présente au moins une section de serrage (31) pour fixer l'élément de retenue (30) sur le boîtier de montage (20), en particulier dans une direction de montage (202) de l'élément de retenue (30).

9. Dispositif de verrouillage (10) selon l'une quelconque des revendications précédentes, **caractérisé en ce qu'**
un mécanisme de réglage (40) est prévu pour le réglage de l'élément de blocage (11) entre une position de verrouillage (41) pour le verrouillage du composant (2) essentiel à la fonction et une position de déverrouillage (42) pour le déverrouillage du composant (2) essentiel à la fonction, l'élément de blocage (11) présentant un moyen de déroulement (43) par lequel l'élément de blocage (11) est logé de manière pivotante sur le mécanisme de réglage (40).

10. Dispositif de verrouillage (10) selon l'une quelconque des revendications précédentes, **caractérisé en ce que**
la section de boîtier rigide (23) du boîtier de montage (20) présente une interface de fixation (25) pour la fixation du boîtier de montage (20) sur le boîtier de composant (4), en particulier l'interface de fixation (25) étant disposée sur un côté (21.1) du guide d'élément de blocage (21) opposé à l'élément d'évitement (22).

11. Dispositif de verrouillage (10) selon l'une quelconque des revendications précédentes, **caractérisé en ce que**
le boîtier de montage (20) et/ou l'élément d'évitement (22) est réalisé sous forme de pièce coulée, en particulier de pièce en zinc coulée sous pression,
et/ou **en ce qu'**au moins un moyen de stockage (14) pour stocker un lubrifiant est disposé sur un côté intérieur de boîtier (21.3) du guide d'élément de blocage (21) opposé à l'élément d'évitement (22).

12. Unité fonctionnelle (3) pour un véhicule (1) présentant
un composant (2) essentiel à la fonction du véhicule (1), et
un dispositif de verrouillage (10) pour le composant essentiel à la fonction (2), avec un élément de blocage (11) pour verrouiller le composant essentiel à la fonction (2), et un boîtier de montage (20) dans lequel l'élément de blocage (11) est disposé de manière mobile, le boîtier de montage (20) étant monté au moins partiellement avec un espace libre (4.1) vers un boîtier de composant (4) pour le composant (2) essentiel à la fonction,
**caractérisé en ce que,**
le boîtier de montage (20) présente une section de boîtier rigide (23) et un élément d'évitement (22), l'élément d'évitement (22) étant disposé de manière mobile sur la section de boîtier rigide (23), afin d'éviter un mouvement de basculement (200) de l'élément de blocage (11) en direction de l'espace libre (4.1) d'une position de repos (I) dans une position d'évitement (II).

13. Unité fonctionnelle (3) selon la revendication 12,
**caractérisé en ce que**
l'élément de blocage (11) peut être enfiché à travers une ouverture d'accès (5) du boîtier de composant (4) pour verrouiller le composant (2) essentiel à la fonction, l'élément d'évitement (22) présentant dans au moins une direction spatiale, de préférence dans toutes les directions spatiales, une extension qui est supérieure à un diamètre de l'ouverture d'accès (5).

14. Procédé (100) de support non destructif d'un mouvement d'un composant (2) essentiel à la fonction d'un véhicule (1) verrouillé par un élément de blocage (11) d'un dispositif de verrouillage (10), notamment selon l'une des revendications 1 à 11, dans lequel un boîtier de montage (20) du dispositif de verrouillage (10) est monté au moins partiellement dans un boîtier de composant (4) pour le composant (2) essentiel à la fonction, de sorte qu'un espace libre (4.1) est formé entre le boîtier de composant (4) et le boîtier de montage (20), comprenant les étapes suivantes :
- transmettre (101) une charge du composant (2) essentiel à la fonction à l'élément de blocage (11), de sorte qu'il se produit un mouvement de basculement (200) de l'élément de blocage (11) en direction de l'espace libre (4.1),
- le déplacement (102) d'un élément d'évitement (22) en direction de l'espace libre (4.1) d'une position de repos (I) dans une position d'évitement (II), afin d'éviter le mouvement de basculement (200) de l'élément de blocage (11),
- l'appui (103) de l'élément de blocage (11) sur le boîtier de composant (3).

15. Procédé selon la revendication 14,
**caractérisé en ce que**
le procédé (100) comprend l'étape suivante :
le retour (104) de l'élément d'évitement (22) de la position d'évitement (II) à la position de repos (I).
